# EUROPEAN PATENT APPLICATION

(11) **EP 1 150 415 A2**
(43) Date of publication of application: **31.10.2001**
(21) Application number: 01110362.9
(22) Date of filing: 26.04.2001
(51) Int. Cl.: H02K 5/14

(54) **Brush cover of starter**

(30) Priority: 27.04.2000 KR 2000022569
(71) Applicant: Valeo Mando Electrical Systems Korea Limited, Kyongju-si, Kyongsangbuk-do (KR)
(72) Inventor: Lee, Sae-Hwan, Kyongju-si, Kyongsangbuk-do,780-140 (KR); Ahn, Sang-Hyuk, Kyongsangbuk-do, 780-140 (KR)
(74) Representative: TER MEER STEINMEISTER & PARTNER GbR

(57) **Abstract**

The present invention relates to a brush cover of a starter which is capable of stably assembling a cover to one side of a brush holder by installing a brush in a holder of a brush apparatus and connecting a cable to the brush in a brush apparatus in which a power is supplied to an armature of a starter installed for starting an engine for thereby implementing a rotation operation of the armature. There is provided a brush cover of a starter in which an insertion protrusion is formed in a boss of a shaft hole of a brush holder, and a cover formed of an insulation material is engaged to a portion of the insertion protrusion, and an insertion groove corresponding to the insertion protrusion is formed in the cover in a brush holder of a starter which is installed in a brush holder in such a manner that brushes connected with a terminal of a battery by a cable for supplying a power to the battery through a rectifier by installing an armature for starting an engine by rotating a pinion and installing the rectifier at one side of the armature are contacted with the rectifier, and the brushes are separated from each other.

## Description

### BACKGROUND OF THE INVENTION

### 1. Field of the Invention

The present invention relates to a brush cover of a starter, and in particular to a brush cover of a starter which is capable of stably assembling a cover to a portion of a brush holder for implementing an assembling operation of a brush by installing a brush in a holder of a brush apparatus and connecting a cable with the brush in a brush apparatus in which an armature implements a rotation operation by supplying a power to an armature of a starter installed for starting an engine.

### 2. Description of the Background Art

Generally, in a starter installed for starting an engine of a vehicle, an armature is installed for driving an engine by rotating a pinion. A rectifier is installed at one side of the armature. A brush connected with a terminal of a battery by a cable for supplying a power of the battery through the rectifier is installed for thereby contacting with the rectifier. The brushes are installed in a brush holder for thereby preventing a contact in a separated state for an insulation.

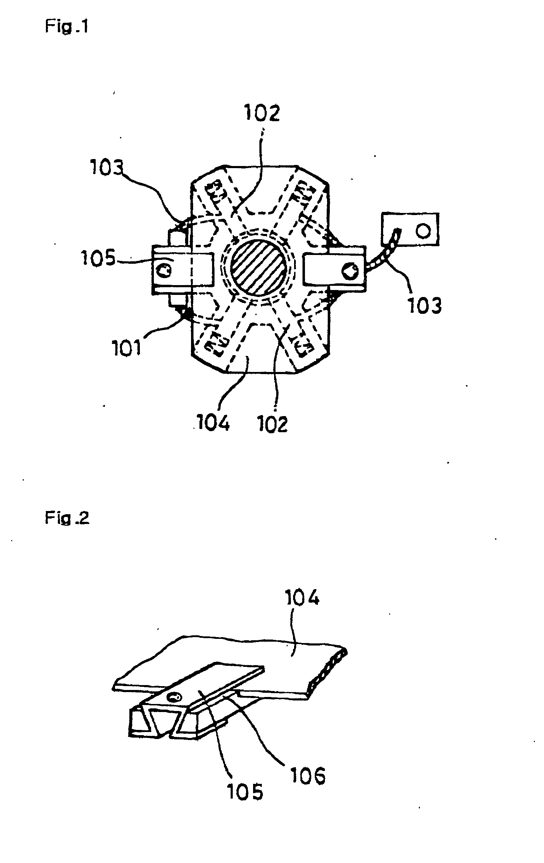

As shown in Figures 1 and 2, in the conventional brush apparatus, a pair of brushes 102 connected with a cable 103 are Installed in a brush holder 101. A cover 104 is assembled in such a manner that an insulation member is disposed at one side of the brush holder 101. One end of the cover 104 is inserted into an engaging shoulder portion formed at one end of the brush holder 101, and a fixing member 105 having a guide groove 106 is inserted into one end of the cover 104 and is engaged with the brush holder 101.

In the conventional art, an insulation member is additionally provided for assembling the cover 104 installed in the brush holder 101. In addition, when assembling the cover 104, the cover 104 is assembled using an engaging shoulder portion of the brush holder 101 and the fixing member 105 having a guide groove 106. Therefore, it is not easy to assembly the brush holder 101 and the cover 104. The assembled state of the cover 104 is not stable.

### SUMMARY OF THE INVENTION

Accordingly, it is an object of the present invention to provide a brush cover of a starter which is capable of stably assembling a cover to one side of a brush holder by installing a brush in a holder of a brush apparatus and connecting a cable to the brush in a brush apparatus in which a power is supplied to an armature of a starter installed for starting an engine for thereby implementing a rotation operation of the armature.

In order to achieve the above object, there is provided a brush cover of a starter in which an insertion protrusion is formed in a boss of a shaft hole of a brush holder, and a cover formed of an insulation material is engaged to a portion of the insertion protrusion, and an insertion groove corresponding to the insertion protrusion is formed in the cover in a brush holder of a starter which is installed in a brush holder in such a manner that brushes connected with a terminal of a battery by a cable for supplying a power to the battery through a rectifier by installing an armature for starting an engine by rotating a pinion and installing the rectifier at one side of the armatura are contacted with the rectifier, and the brushes are separated from each other.

### BRIEF DESCRIPTION OF THE DRAWINGS

The present invention will become better understood with reference to the accompanying drawings which are given only by way of illustration and thus are not limitative of the present invention, wherein;
Figure 1 is a view illustrating the construction of a conventional brush holder;
Figure 2 is a perspective view illustrating an assembling portion of a conventional brush holder;

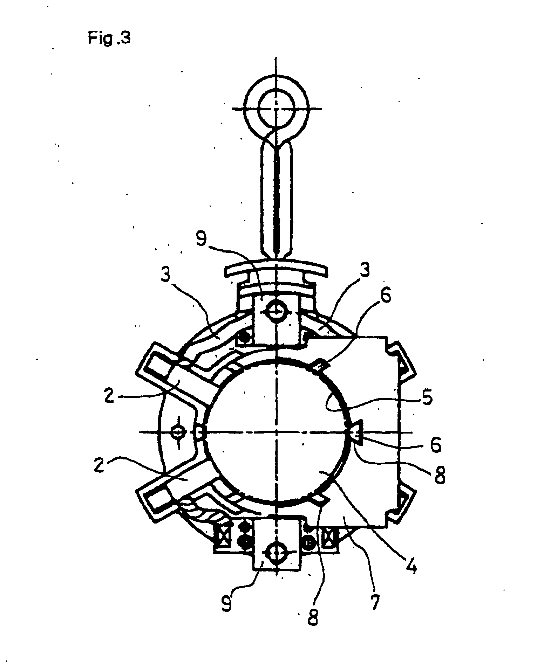

Figure 3 is a view illustrating the construction of a brush cover of a starter according to the present invention; and

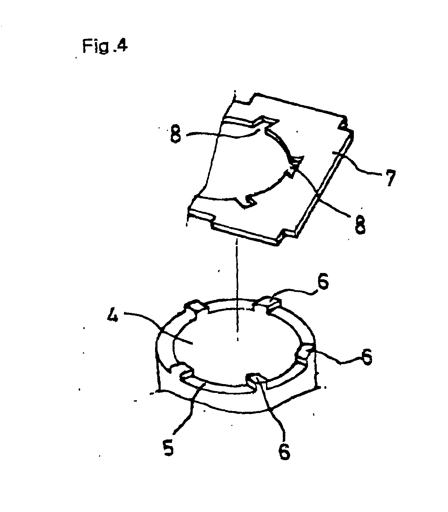

Figure 4 is a perspective view illustrating a brush cover of a starter according to the present invention.

### DETAILED DESCRIPTION OF THE PREFERRED EMBODIMENTS

The embodiments of the present invention will be explained with reference to the accompanying drawings

In a brush holder of a starter which is installed in a brush holder in such a manner that brushes 2 connected with a terminal of a battery by a cable 3 for supplying a power to the battery through a rectifier by installing an armature for starting an engine by rotating a pinion and installing the rectifier at one side of the armature are contacted with the rectifier, and the brushes 2 are separated from each other, a brush cover of a starter, an insertion protrusion is formed in a boss 5 of a shaft hole 4 of a brush holder 1, and a cover formed of an insulation material is engaged to a portion of the insertion protrusion, and an insertion groove 8 corresponding to the insertion protrusion 6 is formed in the cover 7. A connection terminal 9 is connected with both sides of the cover 7 using the cable 3.

As described above, in a brush holder of a starter in which an armature is installed for starting an engine by rotating a pinion, A rectifier is installed at one side of the armature. A brush 2 connected with a terminal of a battery by a cable 3 for supplying a power of the battery through tha rotating rectifier contacts with the rectifier. The brushes 2 are separately installed in the brush holder 1. An insertion groove 8 of the cover formed of an insulation material is inserted onto an insertion protrusion 6 formed in a boss 5 of the brush holder 1 having a shaft hole 4. Therefore, the cover 7 is fixed by the brush holder 1. A connection terminal 9 is disposed at both sides of the cover 7 for a connection with the cable 3.

When assembling the cover 7, the insertion groove 8 of the cover 7 and the insertion protrusion portion 6 formed in the brush holder 1 are engaged each other for thereby assembling the cover 7. The cover 7 is formed of an insulation material for thereby decreasing the number of parts, and it is possible to stably fix the cover 7.

As described above, when assembling the cover 7, the insertion groove 8 of the cover 7 receives the insertion protrusion 6 formed in the brush holder 1. The cover 7 is formed of an insulation material. The cover 7 is assembled by one step. The assembled state of the cover 7 is stable. Since the cover 7 is formed of a strong insulation material, the number of parts is decreased. An insulation operation is implemented by the cover 7. The inherent operations of the brushes 2 are implemented. The cover 7 having an insulation function is installed to the brush holder 1 for thereby implementing one set unit. In addition, it is possible to easily assembly the brush holder 1 to the starter.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the meets and bounds of the claims, or equivalences of such meets and bounds are therefore intended to be embraced by the appended claims.

## Claims

1. In a brush holder of a starter which is installed in a brush holder in such a manner that brushes connected with a terminal of a battery by a cable for supplying a powsr to the battery through a rectifier by installing an armature for starting an engine by rotating a pinion and installing the rectifier at one side of the armature are contacted with the rectifier, and the brushes are separated from each other, a brush cover of a starter in which an insertion protrusion is formed in a boss of a shaft hole of a brush holder, and a cover formed of an insulation material is engaged to a portion of the insertion protrusion, and an insertion groove corresponding to the insertion protrusion is formed in the cover.
